# EUROPEAN PATENT APPLICATION

(11) **EP 2 202 675 A1**
(43) Date of publication of application: **30.06.2010**
(21) Application number: 08830798.8
(22) Date of filing: 08.09.2008
(51) Int. Cl.: G06K 17/00, H04M 1/00

(54) **READER/WRITER AND AUTHENTICATION SYSTEM USING THE READER/WRITER**

(30) Priority: 10.09.2007 JP 2007233683; 10.09.2007 JP 2007234203; 23.10.2007 JP 2007275357; 19.05.2008 JP 2008130425; 19.06.2008 JP 2008159970; 10.07.2008 JP 2008179846
(71) Applicant: Panasonic Corporation, Kadoma-shi Osaka 571-8501 (JP)
(72) Inventor: SAITO, Jyunichi, Chuo-ku Osaka 540-6207 (JP); MATSUMOTO, Takayuki, Chuo-ku Osaka 540-6207 (JP); NAKAGAWA, Masafumi, Chuo-ku Osaka 540-6207 (JP); NARA, Hiroki, Chuo-ku Osaka 540-6207 (JP); TOYOTA, Hiromi, Chuo-ku Osaka 540-6207 (JP)
(74) Representative: Eisenführ, Speiser & Partner
(86) International application number: PCT/JP2008/002475
(87) International publication number: WO 2009/034702

(57) **Abstract**

In the invention, a reception intensity threshold value at which it is determined in a wireless communication function of a SIM card that a received signal is present, and a transmission output upon signal transmission are changed in response to a structure of a mobile terminal device to which the SIM card is inserted.

A response signal (SIG402) containing a reception intensity value of a authentication level setting signal (SIG401), and a response signal (SIG404) containing a reception intensity value of a authentication level setting signal (SIG403) are received. A reception intensity value of the authentication level setting signal (SIG401) and a reception intensity value of the authentication level setting signal (SIG403) are compared and a larger reception intensity value X is stored. A used antenna (antenna P) that is used when the reception intensity value X has been obtained is specified, and, an antenna to be used to transmit a signal transmitted from the reader/writer device 150 in an authentication phase is decided.

## Description

### Technical Field

The present invention relates to a reader/writer device which performs wireless communication via an SIM card having a wireless communication function mounted on a mobile terminal device, and an authentication system including the reader/writer device and the mobile terminal device.

### Background Art

Recently, it is possible to insert/extract a SIM (Subscriber Identity Modulecard) card into/from a mobile terminal device, as represented by a mobile phone. The mobile terminal device is in physical contact with a SIM chip provided on the SIM card, and executes a process of writing data to the SIM chip via a contact portion or a process of reading data from the SIM chip.

Patent Citation 1 discloses a mobile terminal device into/from which a SIM card further including an RF-ID (Radio Frequency Identification) tag is capable of being inserted/extracted. The RF-ID tag wirelessly communicates with the reader/writer device by executing a process of writing data to the SIM chip or a process of reading data from the SIM chip.

Patent Citation 1: JP-T-2007-507766

### Disclosure of Invention

### Technical Problem

However, it is possible for the SIM card to be inserted into/extracted from various structures of mobile terminal devices, but a radio wave environment of an RF-ID tag provided on the SIM card also differs since the structure of a SIM card neighborhood upon insertion into a mobile terminal device differs according to the mobile terminal device. For example, when the case where the SIM card is inserted into a position facing a battery in the mobile terminal device is compared with the case where the SIM card is inserted into a position separated from the battery, the reception intensity of a radio wave received by the RF-ID tag from the reader/writer device located in a position separated by a certain distance tends to be lower in the former case.

As described above, in the RF-ID tag provided on the SIM card, a threshold value of a minimum required reception intensity for the RF-ID tag for performing wireless communication is necessary to be set in accordance with the mobile terminal device having a structure in which the reception intensity of a radio wave received by the RF-ID tag is lowest since a radio wave environment, particularly, the reception intensity of a radio wave received by the RF-ID tag, varies with a structure of the mobile terminal device into which the SIM card is inserted. As a result, the RF-ID tag also receives a radio wave having a low reception intensity and the effect of noise on the wireless communication is increased. Thus, it is desirable to set a threshold value of a minimum required reception intensity for an RF-ID tag to perform wireless communication in response to the structure of the mobile terminal device into which a SIM card is inserted.

Likewise, when the case where the SIM card is inserted into the backside of a battery in a mobile terminal device is compared with the case where the SIM card is inserted into a position facing the front side of the battery or is inserted into a position separated from the battery, the transmission outputs of signals transmitted from RF-ID tags for causing a reception level of the reader/writer device located in a position separated by a certain distance to be constant are different from each other. Thus, it is desirable to set a transmission output level of a corresponding RF-ID tag for performing wireless communication in response to the structure of a mobile terminal device into which a SIM card is inserted.

The present invention has been made in view of the above circumferences, and an object of the invention is to provide a SIM card capable of optimally setting a reception intensity threshold value which determines that a received signal is present in a wireless communication function of the SIM card and a transmission output upon signal transmission in response to an inserted structure of a mobile terminal device in the SIM card capable of being inserted into/extracted from the mobile terminal device and having the wireless communication function.

### Technical Solution

To solve the above-described problem of the related art, a reader/writer device of the present invention is a reader/writer device for wirelessly communicating with a mobile terminal device equipped with a SIM card having a wireless communication function, including: an antenna device for wirelessly communicating with the mobile terminal device; and a wireless communication controller for controlling wireless communication via the antenna device, wherein the antenna device includes a first antenna section and a second antenna section installed in a position different from that of the first antenna section, and wherein the wireless communication controller transmits authentication level setting signals to the mobile terminal device using the first antenna section and the second antenna section, detects each reception intensity by receiving a response signal including a reception intensity value of each of the authentication level setting signals from the mobile terminal device, and determines whether to use the first antenna section or the second antenna section when wireless communication with the mobile terminal device is performed on the basis of each reception intensity value detected.

Accordingly, regardless of how a user holds or grips the mobile terminal device, an angle between the reader/writer device and the mobile terminal device, and an installation position of the SIM card or a structure of the mobile terminal device, the improvement of security and operability can be promoted since the distance from the mobile terminal device is accurately sensed and the reader/writer device and the mobile terminal device perform authentication communication only within a predetermined distance.

To solve the problem of the related art, an authentication system of the present invention includes a mobile terminal device equipped with a SIM card having a wireless communication function; and the above-described reader/writer device.

Accordingly, regardless of how a user holds or grips the mobile terminal device, an angle between the reader/writer device and the mobile terminal device, and an installation position of the SIM card or a structure of the mobile terminal device, the improvement of security and operability can be promoted since the distance from the mobile terminal device is accurately sensed and the reader/writer device and the mobile terminal device perform authentication communication only within a predetermined distance.

### Advantageous Effects

A reader/writer device and an authentication system of the present invention determine whether to use a first antenna section or a second antenna section upon wireless communication with a mobile terminal device on the basis of a reception intensity value transmitted from the mobile terminal device, thereby accurately performing authentication communication with the mobile terminal device and promoting the improvement of security and operability, regardless of how a user holds or grips the mobile terminal device, an angle between the reader/writer device and the mobile terminal device, and an installation position of the SIM card, or a structure of the mobile terminal device.

### Brief Description of Drawings

[Fig. 1] Fig. 1 is a perspective view of a mobile terminal device of an embodiment 1 of the present invention.
[Fig. 2] Fig. 2 is a functional block diagram of the mobile terminal device and a SIM card of the embodiment 1 of the present invention.
[Fig. 3] Fig. 3 is a functional block diagram of a reader/writer device of the embodiment 1 of the present invention.
[Fig. 4] Fig. 4 is a sequence diagram of an initial setting phase in the mobile terminal device and the reader/writer device of the embodiment 1 of the present invention.
[Fig. 5] Fig. 5 is a sequence diagram of an authentication phase in the mobile terminal device and the reader/writer device of the embodiment 1 of the present invention.
[Fig. 6] Fig. 6 is an example of a correspondence table stored in a SIM card of an embodiment 2 of the present invention.
[Fig. 7] Fig. 7 is a flowchart showing the flow of processing by a mobile terminal device of the embodiment 2 of the present invention.
[Fig. 8] Fig. 8 is a flowchart showing the flow of processing by the mobile terminal device of the embodiment 2 of the present invention.
[Fig. 9] Fig. 9 is a sequence diagram showing an example of an operation of interrupting start bit detection in a SIM card of an embodiment 3 of the present invention.
[Fig. 10] Fig. 10 is a flowchart showing an example of the operation of interrupting start bit detection in the SIM card of the embodiment 3 of the present invention.
[Fig. 11] Fig. 11 is a diagram showing an example of a positional relationship between a mobile terminal device and a reader/writer of an embodiment 4 of the present invention.
[Fig. 12] Fig. 12 is an authentication processing sequence between the mobile terminal device and the reader/writer of the embodiment 4 of the present invention.
[Fig. 13] Fig. 13 is a diagram illustrating the timing of transmitting/receiving a pre-authentication request and a pre-authentication response of the embodiment 4 of the present invention.
[Fig. 14] Fig. 14 is a diagram illustrating the frame formats of the pre-authentication request and the pre-authentication response of the embodiment 4 of the present invention.

### Explanation of Reference

- 110:: MOBILE TERMINAL DEVICE
- 111:: BATTERY
- 112:: COVER
- 120:: SIM CARD
- 121:: SIM CHIP
- 122:: RADIO CIRCUIT
- 131:: CELLULAR TRANSMISSION/RECEPTION SECTION
- 132:: STORAGE SECTION
- 133:: SIM CARD CONNECTION SECTION
- 134:: CONTROL SECTION
- 141:: STORAGE SECTION
- 142:: MOBILE TERMINAL CONNECTION SECTION
- 143:: CONTROL SECTION
- 144:: SHORT-RANGE WIRELESS TRANSMISSION/RECEPTION SECTION
- 145:: SECURITY STORAGE SECTION
- 150:: READER/WRITER DEVICE
- 151:: SHORT-RANGE WIRELESS TRANSMISSION/RECEPTION SECTION
- 152:: CONTROL SECTION
- 153:: STORAGE SECTION
- 154:: EXTERNAL COMMUNICATION SECTION

### Best Mode for Carrying Out the Invention

A first invention is a reader/writer device for wirelessly communicating with a mobile terminal device equipped with a SIM card having a wireless communication function, including: an antenna device for wirelessly communicating with the mobile terminal device; and a wireless communication controller for controlling wireless communication via the antenna device, wherein the antenna device includes a first antenna section and a second antenna section installed in a position different from that of the first antenna section, and wherein the wireless communication controller transmits authentication level setting signals to the mobile terminal device using the first antenna section and the second antenna section, detects each reception intensity by receiving a response signal including a reception intensity value of each of the authentication level setting signals from the mobile terminal device, and determines whether to use the first antenna section or the second antenna section when wireless communication with the mobile terminal device is performed on the basis of each reception intensity value detected.

According to a second invention in addition to the first invention, the wireless communication controller determines to use the first antenna section upon wireless communication with the mobile terminal device when a reception intensity value obtained by employing the first antenna section is greater than a reception intensity value obtained by employing the second antenna section, and determines to use the second antenna section upon wireless communication with the mobile terminal device when the reception intensity value obtained by employing the first antenna section is equal to or less than the reception intensity value obtained by employing the second antenna section.

According to a third invention in addition to the second invention, the wireless communication controller controls a storage means to store a larger reception intensity value between the reception intensity value obtained by employing the first antenna section and the reception intensity value obtained by employing the second antenna section, produces a reception intensity value of a wireless message when the wireless message transmitted from the mobile terminal device has been received, and compares the reception intensity value with the reception intensity value stored in the storage means.

Accordingly, regardless of how a user holds or grips the mobile terminal device, an angle between the reader/writer device and the mobile terminal device, and an installation position of the SIM card or a structure of the mobile terminal device, the improvement of security and operability can be promoted since the distance from the mobile terminal device is accurately sensed, and the reader/writer device and the mobile terminal device perform authentication communication only within a predetermined distance.

A fourth invention is an authentication system including: a mobile terminal device equipped with a SIM card having a wireless communication function; and the reader/writer device according to any one of the first to third inventions.

Thereby, authentication communication with the mobile terminal device can be performed and the improvement of security and operability can be promoted, regardless of how a user holds or grips the mobile terminal device, an angle between the reader/writer device and the mobile terminal device, and an installation position of the SIM card or a structure of the mobile terminal device.

Hereinafter, embodiments of the present invention will be described with reference to the drawings. The present invention is not limited to the embodiments.

### (Embodiment 1)

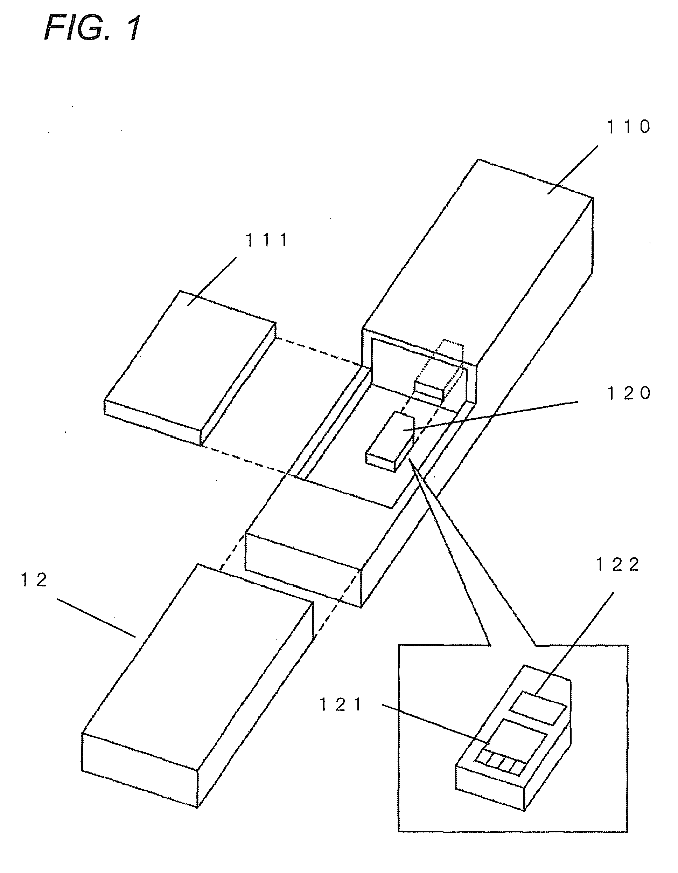

Fig. 1 is a perspective view of a mobile terminal device of an embodiment of the present invention. The mobile terminal device shown in Fig. 1 includes a mobile terminal device 110 having a display and operation keys provided on a housing surface and a circuit board provided inside a housing of the mobile terminal device 110, a battery 111 which supplies power to the circuit board of the main body of the mobile terminal device 110, and a cover 112 which protects the battery 111.

The mobile terminal device 110 has a structure in which a SIM card 120 is inserted inside the housing. The SIM card 120 is stored in the main body 111 of the mobile terminal device covered with the battery 111 and the cover 112 in this order.

The SIM card 120 includes a SIM chip 121 and a radio circuit 122. The SIM chip 121 is installed to be exposed on the surface of the SIM card 120. In the mobile terminal device 110, a connection terminal is installed in contact with a conductor plate of the SIM chip 121. The mobile terminal device 110 and the SIM card 120 transmit/receive a signal via the connection terminal.

The mobile terminal device of the embodiment of the present invention is not limited to the structure shown in Fig. 1, and is applicable to mobile terminal devices having various structures into/from which the SIM card is capable of being inserted/extracted. A radio wave environment of a radio circuit provided on a SIM card also differs when a certain SIM card is inserted into various mobile terminal devices which differ in terms of a structure into/from which the SIM card is capable of being inserted/extracted, a structure of a SIM card neighborhood, or a material. However, the mobile terminal device of the embodiment of the present invention sets a threshold value of a minimum required reception intensity for a corresponding radio circuit or a transmission output upon signal transmission so as to perform wireless communication suitable for the radio wave environment.

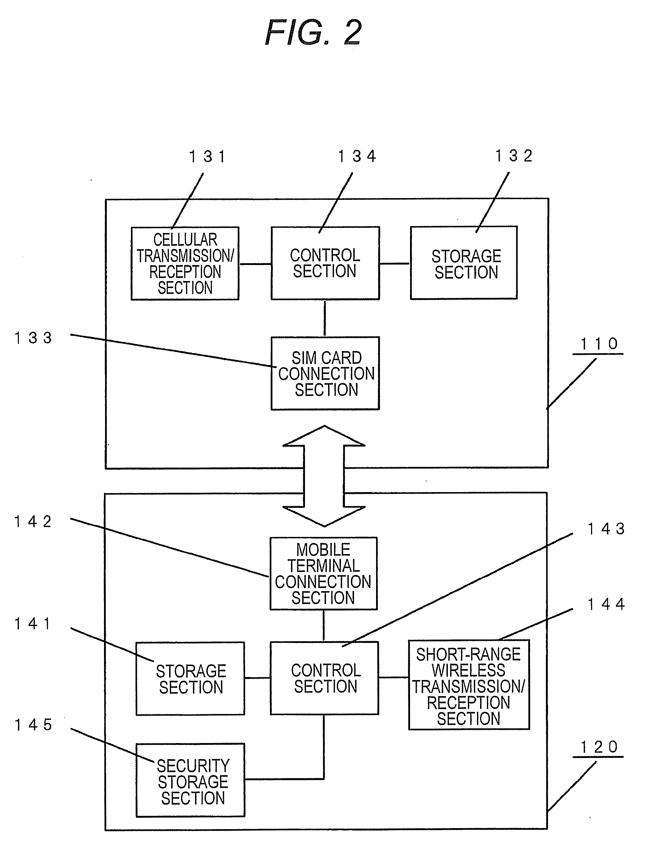

Next, the functional blocks of the mobile terminal device and the SIM card of the embodiment of the present invention are shown in Fig. 2.

The mobile terminal device 110 includes a cellular transmission/reception section 131, a storage section 132, a SIM card connection section 133, and a control section 134.

The cellular transmission/reception section 131 transmits/receives digital data in conformity to a predetermined communication system arranged with a wireless base station (not shown in Fig. 2).

The storage section 132 stores a program to be executed by the control section 134 or a calculation result produced by executing the program, and various data such as data input from the SIM card 120 via the SIM card connection section 133.

The SIM card connection section 133 corresponds to a connection terminal to the SIM card 120 installed to the mobile terminal device 110 described above, and inputs/outputs a signal to/from the SIM card 120.

The control section 134 executes various types of control such as wireless communication control by the cellular transmission/reception section 131, a control operation of inputting/outputting data to/from the SIM card 120, a control operation of writing/reading data to/from the storage section 122, and the like by referring to various programs stored in the storage section 132.

On the other hand, the SIM card 120 includes a storage section 141, a mobile terminal connection section 142, a control section 143, a short-range wireless transmission/reception section 144, and a security storage section 145.

The storage section 141 stores a program to be executed by the control section 143, a calculation result produced by executing the program, or various data such as data input from the mobile terminal device 110 via the mobile terminal connection section 142.

The mobile terminal connection section 142 corresponds to the conductor plate of the SIM chip 121 exposed on the surface of the SIM card 120 described above, and inputs/outputs a signal to/from the mobile terminal device 110.

The control section 143 executes various types of control such as wireless communication control by the short-range wireless transmission/reception section 144, a control operation of inputting/outputting data to/from the mobile terminal device 110, a control operation of writing/reading data to/from the storage section 141, and the like by referring to various programs stored in the storage section 141 or the security storage section 145. The control section 143 detects a reception intensity value of a signal received by the short-range wireless transmission/reception section 144.

The short-range wireless transmission/reception section 144 corresponds to the radio circuit 122. The short-range wireless transmission/reception section 144 transmits/receives a signal via a radio wave for short-range communication to be used in 400 MHz-band specified low-power radio and RFID (Radio Frequency Identification) or a radio wave of a UWB (Ultra Wide Band) or the like via an antenna formed on the radio circuit 122.

For example, the security storage section 145 stores necessary information when a payment process is executed between the mobile terminal device and the reader/writer device. Specifically, the security storage section 145 stores a password for connecting to a payment processing network managed by a bank or personal information regarding payment. It is also possible to store information for executing the payment process in the storage section 141, but important information is neither easily written nor easily deleted by storing the information for executing the payment process separately from the storage section 141.

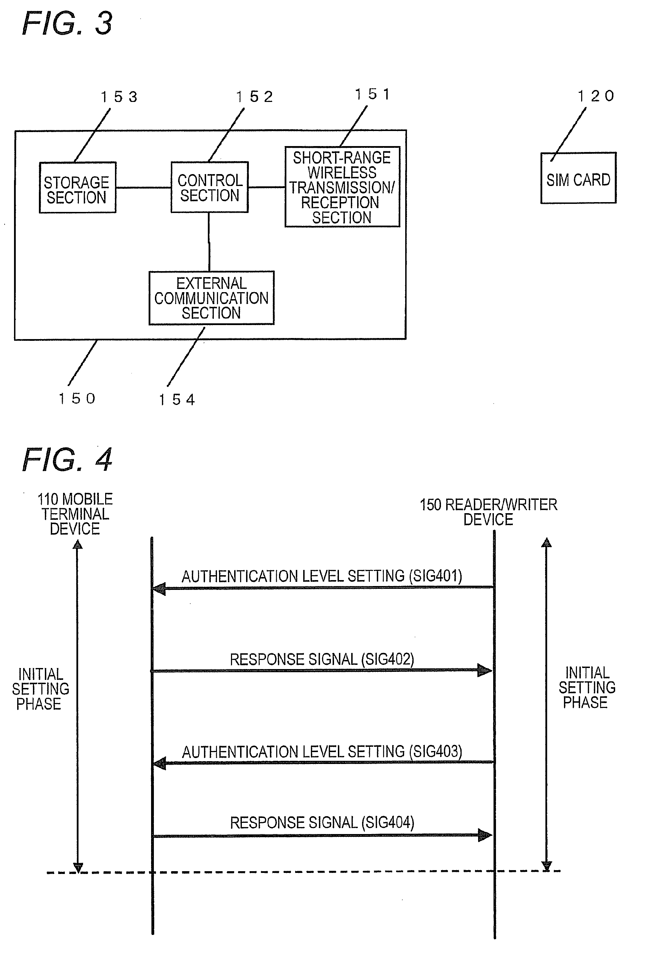

Next, the functional blocks of the reader/writer device are shown in Fig. 3.

A reader/writer device 150 is constituted to include a short-range wireless transmission/reception section 151, a control section 152, a storage section 153, and an external communication section 154.

The short-range wireless transmission/reception section 151 transmits/receives a signal to/from the short-range wireless transmission/reception section 144 via antennas formed on a radio circuit (not shown). A plurality of antennas (hereinafter, referred to as an antenna P and an antenna Q) is formed on the radio circuit, and is respectively formed at different positions on the radio circuit.

The control section 152 executes a certain process for a signal input from the short-range wireless transmission/reception section 151. For example, data to be written to the SIM card 120 is read from the storage section 153, and a read signal is output to the short-range wireless transmission/reception section 151 or the external communication section 154. A reception intensity value of a signal received by the short-range wireless transmission/reception section 151 is detected.

The external communication section 154 can be connected to an external server by making a connection to an external communication network such as the Internet. For example, when a payment process is executed, a connection to a payment processing network managed by a bank or card company is made via the external communication section 154 in response to a request signal from the SIM card 120, and communication with a server held by the bank or card company is performed.

Next, an initial setting method in which the mobile terminal 110 and the reader/writer device 150 perform wireless communication is shown in Fig. 4.

For the initial setting shown in Fig. 4, it is necessary to switch the mobile terminal device 110 and the reader/writer device 150 to an initial setting phase by shortening the distance between the mobile terminal device 110 and the reader/writer device 150 to a certain extent. The initial setting phase is a phase for performing the initial setting in the mobile terminal device 110 or the reader/writer device 150 and is a phase for optimally setting a reception intensity threshold value which determines that a received signal is present from a signal transmitted from the reader/writer device 150 and a transmission output upon signal transmission.

When each of the mobile terminal device 110 and the reader/writer device 150 is switched to the initial setting phase, the reader/writer device 150 transmits an authentication level setting signal SIG401 to the short-range wireless transmission/reception section 144 using one antenna (antenna P) of the plurality of antennas constituting the short-range wireless transmission/reception section 151.

The control section 143 detects a reception intensity value of the authentication level setting signal SIG401 received by the short-range wireless transmission/reception section 144, and stores the reception intensity value in the storage section 141 when the reception intensity value is equal to or greater than a preset value. A response signal SIG402 is transmitted to the short-range wireless transmission/reception section 151 via the short-range wireless transmission/reception section 144. Here, the response signal SIG402 includes the reception intensity value of the authentication level setting signal SIG401.

When the authentication level setting signal SIG401 is incapable of being received by any cause or the reception intensity value is not equal to or greater than the preset value, the control section 143 does not transmit the response signal SIG402. Alternatively, a signal is transmitted to request the reader/writer device 150 to re-transmit the authentication level setting signal.

Next, when the short-range wireless transmission/reception section 151 receives the response signal SIG402, the control section 152 detects a reception intensity value of the response signal SIG402, and checks whether or not the reception intensity value is equal to or greater than the preset value. When the reception intensity value of the response signal SIG402 is not equal to or greater than a preset value, a signal which requests the mobile terminal device 110 to re-transmit the response signal SIG402 is transmitted. When the response signal SIG402 is incapable of being received even though the request signal is continuously transmitted several times, the authentication level setting signal SIG401 is re-transmitted.

When the reception intensity value of the response signal SIG402 is equal to or greater than the preset value, the reception intensity value of the authentication level setting signal SIG401 included in the response signal SIG402 is stored in the storage section 153.

Next, the reader/writer device 150 transmits an authentication level setting signal SIG403 to the short-range wireless transmission/reception section 144 via an antenna (antenna Q) different from before among the plurality of antennas constituting the short-range wireless transmission/reception section 151.

The control section 143 detects a reception intensity value of the authentication level setting signal SIG403 received by the short-range wireless transmission/reception section 144, and stores the reception intensity value in the storage section 141 when the reception intensity value is equal to or greater than a preset value. A response signal SIG404 is transmitted to the short-range wireless transmission/reception section 151 via the short-range wireless transmission/reception section 144. Here, the response signal SIG404 includes the reception intensity value of the authentication level setting signal SIG403.

When the reception intensity value of the authentication level setting signal SIG403 is not equal to or greater than the preset value, the control section 143 does not transmit the response signal SIG404. Alternatively, a signal which requests the re-transmission of the authentication level setting signal SIG403 is transmitted.

When the transmission of the response signal SIG404 is ended, the control section 143 compares the reception intensity value of the authentication level setting signal SIG401 stored in the storage section 141 with the reception intensity value of the authentication level setting signal SIG403, stores a larger reception intensity value X, and deletes a smaller reception intensity value. When the response signal SIG402 has been transmitted, a transmission intensity value Y is stored in the storage section 141.

On the other hand, the control section 152 receiving the response signal SIG404 detects a reception intensity value of the response signal SIG404, and checks whether or not the reception intensity value is equal to or greater than a preset value. When the reception intensity value of the response signal SIG404 is not equal to or greater than a preset value, a signal which requests the mobile terminal device 110 to re-transmit the response signal SIG404 is transmitted. When the response signal SIG404 is incapable of being received even though the request signal is continuously transmitted several times, the authentication level setting signal SIG403 is re-transmitted.

When the reception intensity value of the response signal SIG404 is equal to or greater than the preset value, the reception intensity value of the authentication level setting signal SIG403 included in the response signal SIG404 is stored in the storage section 153.

The control section 152 compares the reception intensity value of the authentication level setting signal SIG401 stored in the storage section 153 with the reception intensity value of the authentication level setting signal SIG403, stores a larger reception intensity value X, and deletes a smaller reception intensity value. Accordingly, it is determined that an antenna having the larger reception intensity value of the two reception intensity values is used.

To specify an antenna to be used to transmit a signal transmitted from the reader/writer device 150 in an authentication phase, the control section 152 specifies the used antenna (the antenna P in the above-described case) when the reception intensity value X has been obtained.

As described above, when the transmission/reception of the authentication level setting signal and the response signal between the mobile terminal device 110 and the reader/writer device 150 via the different antennas constituting the short-range wireless transmission/reception section 151 is ended, the mobile terminal device 110 and the reader/writer device 150 are switched from the initial setting phase to the authentication phase.

The authentication phase is a transition phase after the initial setting phase has been ended and is a phase in which various data is transmitted/received between the mobile terminal device 110 and the reader/writer device 150. The authentication phase is divided into a pre-authentication phase and a main authentication phase. The pre-authentication phase has a period until the SIM card 120 receives a pre-authentication acknowledgement signal from the reader/writer device 150 (defined to be different from that of an embodiment 4 since the reader/writer device 150 does not transmit a pre-authentication stop request signal in the embodiment 1). The main authentication phase has a period until the SIM card 120 receiving a main authentication request signal completes a payment process.

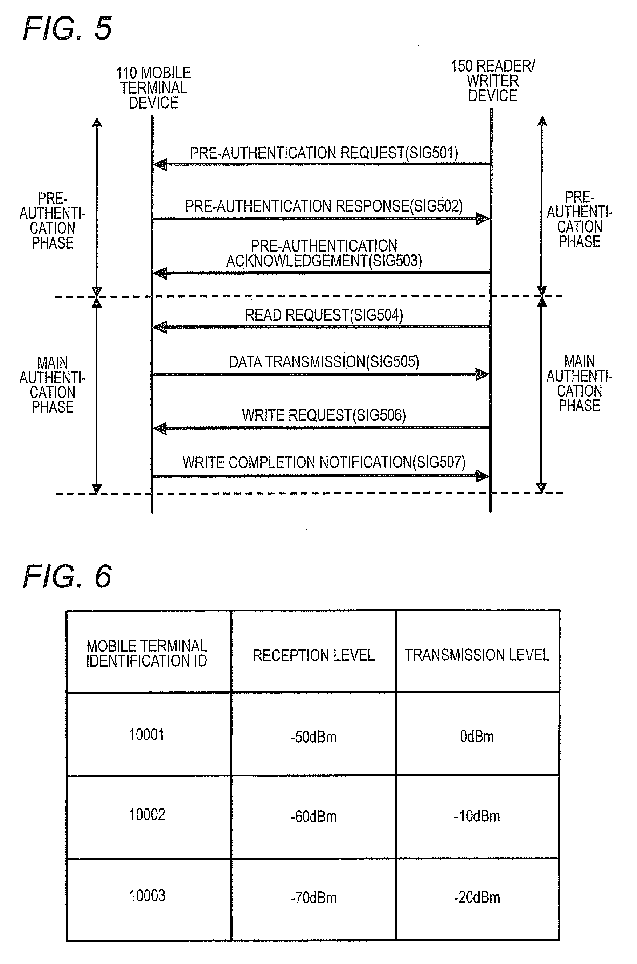

Next, the sequence of the mobile terminal device 110 and the reader/writer device 150 in the pre-authentication phase is shown in Fig. 5. The reader/writer device 150 continues to transmit a pre-authentication request signal SIG501 at any time in a fixed cycle. The pre-authentication phase or the main authentication phase is not limited to the pre-authentication request signal SIG501. An antenna to be used to transmit a signal from the reader/writer device 150 is the used antenna (the antenna P in the above-described case) when the reception intensity value X has been obtained.

When the short-range wireless transmission/reception section 144 receives the pre-authentication request signal SIG501 transmitted from the reader/writer device 150, the control section 143 detects a reception intensity of the pre-authentication request signal received by the wireless transmission/reception section 144.

When the reception intensity of the pre-authentication request signal SIG501 is detected, the control section 143 reads the reception intensity value X of the authentication level setting signal stored in the storage section 141 at the time of the initial setting phase. The control section 143 compares the reception intensity value X with the reception intensity value of the pre-authentication request signal SIG501, and provides the reader/writer device 150 with a pre-authentication response signal SIG502 as a reception acknowledgement of the pre-authentication request signal via the short-range wireless transmission/reception section 144 when the reception intensity value of the pre-authentication request signal SIG501 is greater than the reception intensity value X. When the pre-authentication response signal SIG502 is transmitted, the transmission intensity has the transmission intensity value Y stored in the storage section 141. When the reception intensity value of the pre-authentication request signal SIG501 is less than the reception intensity value X, the pre-authentication response signal SIG502 is not transmitted. Alternatively, a signal which requests the reader/writer device 150 to re-transmit the pre-authentication request signal SIG501 is transmitted.

The reader/writer device 150 receiving the pre-authentication response signal SIG502 detects a reception intensity value of the pre-authentication response signal SIG502 by the control section 152. When the reception intensity value is equal to or greater than a preset value, a pre-authentication acknowledgement SIG503 is transmitted and continuously a read request signal SIG504 is transmitted.

When the read request signal SIG504 from the reader/writer device 150 is received by the short-range wireless transmission/reception section 144, the control section 143 detects reception intensity values of the pre-authentication acknowledgement SIG503 and the read request signal SIG504. When the reception intensity values are equal to or greater than the reception intensity value X, the control section 143 reads necessary data from the storage section 141 or the security storage section 145, and transmits various data SIG505 read therefrom to the read/writer device 150 by the short-range wireless transmission/reception section 144.

For example, in an electronic entrance/exit management system, the data SIG505 is an identification number capable of specifying a person. In the payment process, the data SIG505 is a password for connecting to a payment processing network managed by a bank in addition to the identification number capable of specifying a person.

When the reception of the data SIG505 from the mobile terminal device 110 is ended, the reader/writer device 150 exchanges information with the external server via the external communication server 154 as necessary. In the payment process illustrated above, log-in is done to a payment processing server managed by a bank or card company with an identification number and a password capable of specifying a person via the external communication section 154. After the payment processing server executes a process necessary for the payment, the external communication section 154 receives a payment processing end notification signal.

Next, a write request signal SIG506 is transmitted from the reader/writer device 150 to the mobile terminal device 110. For example, in the payment process, the write request signal SIG506 transmitted from the reader/writer device 150 to the mobile terminal device 110 is notification information indicating that the payment process has been completed.

Finally, when the reception of the write request signal SIG506 transmitted from the reader/writer device 150 is completed, the short-range wireless transmission/reception section 144 transmits a write completion notification signal SIG507 to the reader/writer device 150.

In Fig. 4, when the transmission of the response signal SIG404 is completed, the control section 143 compares the reception intensity value of the authentication level setting signal SIG401 stored in the storage section 141 with the reception intensity value of the authentication level setting signal SIG403, and stores a larger reception intensity value X, and deletes a smaller reception intensity value. Alternatively, the smaller reception intensity value may not be deleted. In this case, when the pre-authentication request signal SIG501 or the pre-authentication acknowledgement signal SIG503, the read request signal SIG504, and the write request signal SIG506 have been received, it is compared whether each reception intensity value is equal to or greater than the reception intensity value X. Even when each reception intensity value is not equal to or greater than the reception intensity value X, each reception intensity is compared with the smaller reception intensity value. When each reception intensity value is equal or greater than the smaller reception intensity value, the pre-authentication response signal SIG502 or the data SIG505 and the write completion notification signal SIG507 may be transmitted. In particular, when the case where each reception intensity value is not equal to or greater than the reception intensity value X has been continued several times, it is desirable to compare each reception intensity value with the smaller reception intensity value.

Thus, it is possible to avoid the repeat of re-transmission between the mobile terminal device and the reader/writer device since the received signal is not equal to or greater than the reception intensity value X.

In Fig. 4, the reader/writer device 150 transmits the authentication level setting signal SIG401 using the antenna P and transmits the authentication level setting signal SIG403 using the antenna Q. Alternatively, when the authentication level setting signal SIG401 is transmitted, the antenna may be switched from the antenna P to the antenna Q while the authentication level setting signal SIG401 is first transmitted using the antenna P. Thus, it is possible to achieve a time reduction since the reader/writer device 150 can complete the initial setting phase by transmitting only the authentication level setting signal SIG401 without necessity to transmit the authentication level setting signal SIG403.

In Fig. 4, a reception intensity value of each response signal may be produced as the reader/writer device 150 receives the response signal SIG402 by the antenna P and receives the response signal SIG404 by the antenna Q without recognizing a reception intensity from a reception intensity value included in the response signal SIG402 or the response signal SIG404.

Alternatively, the reader/writer device 150 may first receive the response signal SIG402 by the antenna P and may perform the reception by the changeover to the antenna Q while the response signal SIG402 is received. Thus, it is possible to achieve the time reduction since the reader/writer device 150 can complete the initial setting phase by receiving only the response signal SIG402 without necessity to receive the response signal SIG404.

### (Embodiment 2)

In the first embodiment, an appropriate reception intensity threshold value or an appropriate transmission level is determined by performing actual wireless communication between the mobile terminal device 110 and the reader/writer device 150. In the second embodiment, accurate communication is performed by storing a reception intensity value or a transmission output intensity for various mobile terminal devices in the storage section 141 of the SIM card 120.

Here, the correspondence table shown in Fig. 6 is stored in the storage section 141. The correspondence table shows a correspondence relationship of three information elements. The first information is a mobile terminal identification ID for identifying a type of mobile terminal device (an ID for identifying a manufacturer, a product name, a manufacturing date, or the like), the second information is a numerical value indicating a reception level (reception intensity), and the third information is a numerical value indicating a transmission level (transmission output).

A manufacturer identification number (an ID for identifying a manufacturer) or a product identification number (an ID for identifying a product name or model) is assigned to the mobile terminal device. In the correspondence table, for example, a product identification number is used as a mobile terminal identification ID, and a reception level is associated with each product identification number. In terms of a numerical value of a reception level assigned to each product identification number, a reception intensity of a radio wave received by the radio circuit 122 from the reader/writer device 150 located in a position separated by a certain distance is pre-measured in a state in which the SIM card 120 has been inserted into a mobile terminal device specified by the product identification number, and the reception level is calculated on the basis of a numerical value of the measured reception intensity (for example, a numerical value of 70 % of the measured reception intensity is set to the reception level). In terms of a numerical value of a reception level assigned to each product identification number, a reception intensity of a radio wave transmitted to the reader/writer device 150 located in a position separated by a certain distance from the radio circuit 122 is pre-measured in a state in which the SIM card 120 has been inserted into the mobile terminal device specified by the product identification number, and the transmission level is calculated on the basis of a numerical value of the measured transmission level. As described above, a correspondence table created by associating a reception level and a transmission level with each product identification number is stored in the storage section 141 of the SIM card 120.

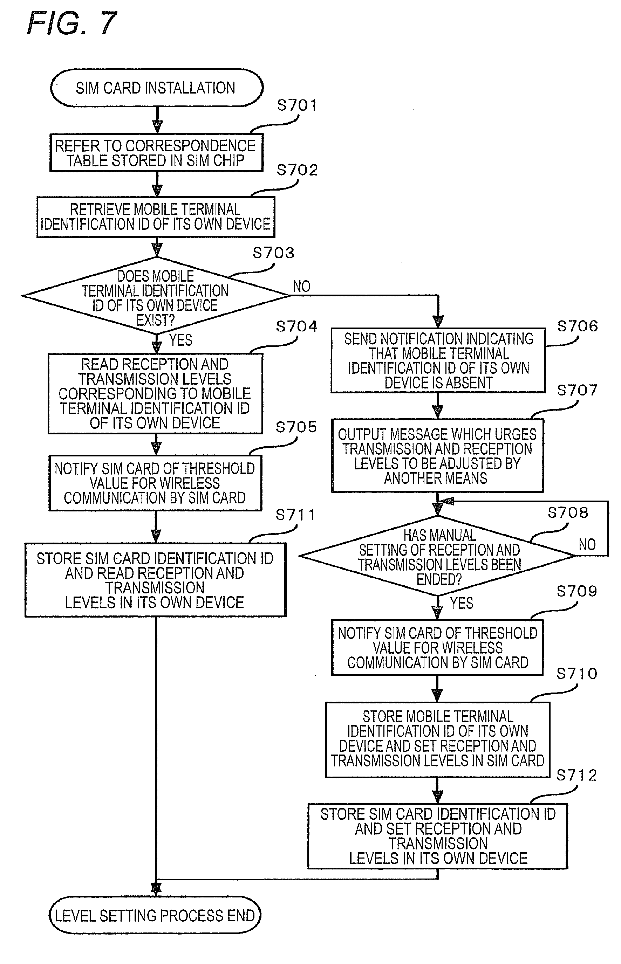

Next, the flow of processing by the mobile terminal device of the embodiment of the present invention is shown in Fig. 7.

When the SIM card is mounted, the mobile terminal device reads a correspondence table stored in the SIM chip 121 from the SIM chip 121 (step 701), and retrieves a mobile terminal identification ID of its own device (mobile terminal device) from the correspondence table (step 702).

When the mobile terminal identification ID of its own device (mobile terminal device) can be detected from the correspondence table (step 703, Y), the mobile terminal device reads a reception level and a transmission level corresponding to the mobile terminal identification ID (step 704) and then outputs the read reception level, a control signal which requests the radio circuit 122 to perform wireless communication by receiving a radio wave of a higher reception intensity than the reception level, the read transmission level, and a control signal which requests the radio circuit 122 to perform wireless communication by the transmission level to the SIM chip 121 (step 705).

On the other hand, when the mobile terminal identification ID of its own device (mobile terminal device) is incapable of being detected from the correspondence table read from the SIM chip 121 (step 703, N), the mobile terminal device notifies a device user of the fact that no mobile terminal identification ID of its own device (mobile terminal device) is present in the correspondence table by a display, a speaker, vibration, or the like (step 706).

After step 706, the mobile terminal device may output a message, which urges a threshold value of a reception intensity, which is received by the radio circuit 122 of the SIM card 120, and a transmission output to be manually set, to the display (that is, which allows the device user to perform the above-described manual setting process so that a reception intensity of a radio wave received by the radio circuit 122 from the reader/writer device 150 located in a position separated by a certain distance or a transmission output of a radio wave transmitted from the radio circuit 122 to the reader/writer device 150 is measured and a reception level and a transmission level are calculated on the basis of numerical values of the reception intensity and the transmission output measured as shown in the first embodiment) (step 707).

The manual setting of the reception level and the transmission level is ended (step 708, Y), the mobile terminal device outputs the set reception level, a control signal which requests the radio circuit 122 to perform wireless communication by receiving a radio wave of a higher reception intensity than the reception level, the read transmission level, and a control signal which requests the radio circuit 122 to perform wireless communication by the transmission level to the SIM chip 121 (step 709), and outputs a control signal which requests that a correspondence relationship of the mobile terminal identification ID of its own device (mobile terminal device) and the set reception and transmission levels should be newly stored to the SIM chip 121 (step 710).

The reception and transmission levels read from the SIM chip 121 in the process of step 704 or the reception and transmission levels manually set in the process of step 708, and the identification ID of the SIM card 120 read from the SIM chip 121 are stored in the storage section 141 of its own device (mobile terminal device) (step 711 or 712).

According to the mobile terminal device of the embodiment of the present invention described above, the radio circuit 122 can perform wireless communication by a transmission/reception level suitable for a structure of the mobile terminal device by setting a reception level of a radio wave to be received by the radio circuit 122 provided on the SIM card 120 and a transmission level to pre-calculated optimum values.

In the process described with reference to the flowchart of Fig. 7, the mobile terminal device controls a reception intensity threshold value of a radio wave to be received by the radio circuit 122 of the SIM card 120 and a transmission output by referring to a correspondence table stored in the SIM chip 121 of the SIM card 120. In another type, it is possible for the mobile terminal device to store a correspondence table read from the SIM chip 121 of the SIM card 120 in the storage section 132 of the mobile terminal device once the SIM card 120 has been inserted, refer to the correspondence table stored in the storage section 132 of the mobile terminal device when the SIM card 120 is later extracted from, and re-inserted into, the mobile terminal device 110, and control a reception intensity threshold value of a radio wave to be received by the radio circuit 122 of the SIM card 120. Thereby, the mobile terminal device can immediately control a transmission/reception intensity of a radio wave to be communicated by the radio circuit 122 of the SIM card 120 for the SIM card 120 which has been inserted once.

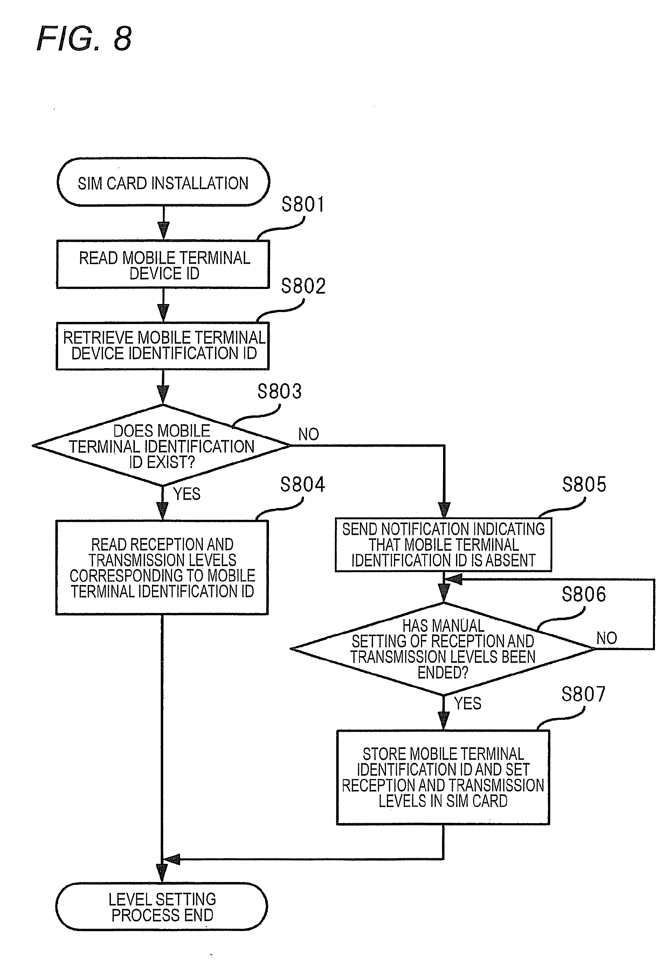

In another type of Fig. 7, the SIM card 120 can read the mobile terminal identification ID when being mounted on the mobile terminal device. In this case, the flow of processing of the SIM card 120 is shown in Fig. 8. First, when the SIM card 120 is mounted on the mobile terminal device, the control section 143 reads the mobile terminal identification ID from the mobile terminal device via the mobile terminal connection section 142 (step 801). The control section 143 retrieves whether or not the read mobile terminal identification ID is written to the correspondence table stored in the storage section 141 (step 802).

When the mobile terminal identification ID can be retrieved in step 802 (step 803, Y), the control section 143 reads a reception level and a transmission level corresponding to the mobile terminal identification ID from the correspondence table (step 804). Thereby, it is determined whether or not reception data to be received by the radio circuit 122 can be received using the reception level read from the correspondence table as a threshold value. Likewise, it is performed by the transmission level read from the correspondence table even for transmission data to be transmitted from the radio circuit 122.

On the other hand, when the mobile terminal identification ID is incapable of being detected in step 802 (step 803, N), the mobile terminal device notifies the device user of the fact that no mobile terminal identification ID is present in the correspondence table by the display, the speaker, vibration, or the like (step 805).

For example, when a threshold value of a reception intensity to be received by the radio circuit 122 and a transmission output to be transmitted by the radio circuit 122 are set by means like the method described in the first embodiment after step 805 (step 806, Y), the control section 143 stores the reception level and the transmission level corresponding to the mobile terminal identification ID in the storage section 141 (step 807). When the reception intensity threshold value and the transmission output are set in step 806, it is subsequently determined whether or not reception data to be received by the radio circuit 122 can be received on the basis of the value, and transmission data to be transmitted from the radio circuit 122 is transmitted by the transmission level read from the correspondence table.

According to the process of the SIM card 120 shown in Fig. 8 as described above, the radio circuit 122 can perform wireless communication by transmission and reception levels suitable for a structure of a mobile terminal device by setting a reception level of a radio wave to be received by the radio circuit 122 provided on the SIM card 120 and a transmission level of a radio wave to be transmitted by the radio circuit 122 to pre-calculated optimum values.

Information regarding a correspondence table including three information elements of a SIM identification ID, a reception level, and a transmission level corresponding to a mobile terminal identification ID of the mobile terminal device may be received via the cellular transmission/reception section 131 provided on the mobile terminal device, and the correspondence table may be configured to be stored in the storage section 141 via the mobile terminal connection section 14. By this configuration, the reception level and the transmission level to be set in the SIM card can be constantly updated to the latest values.

### (Embodiment 3)

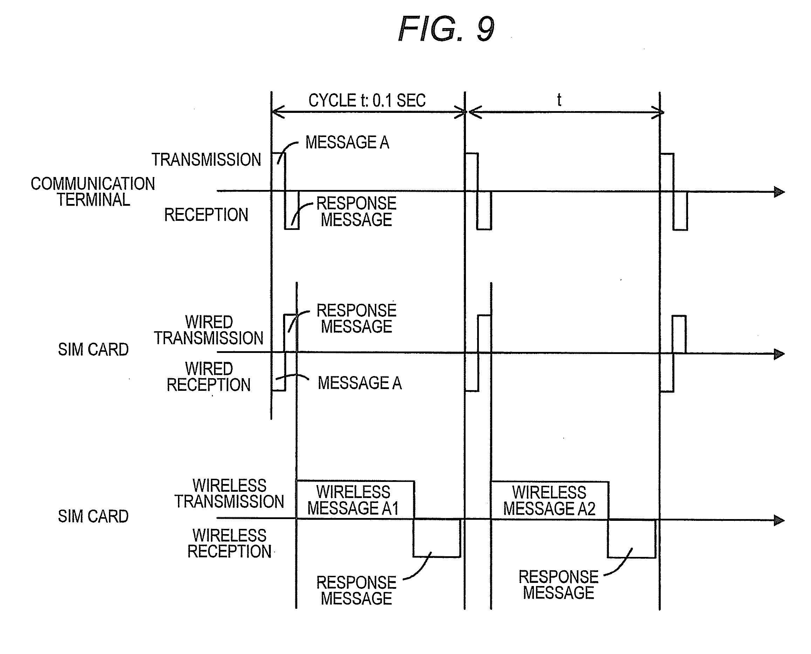

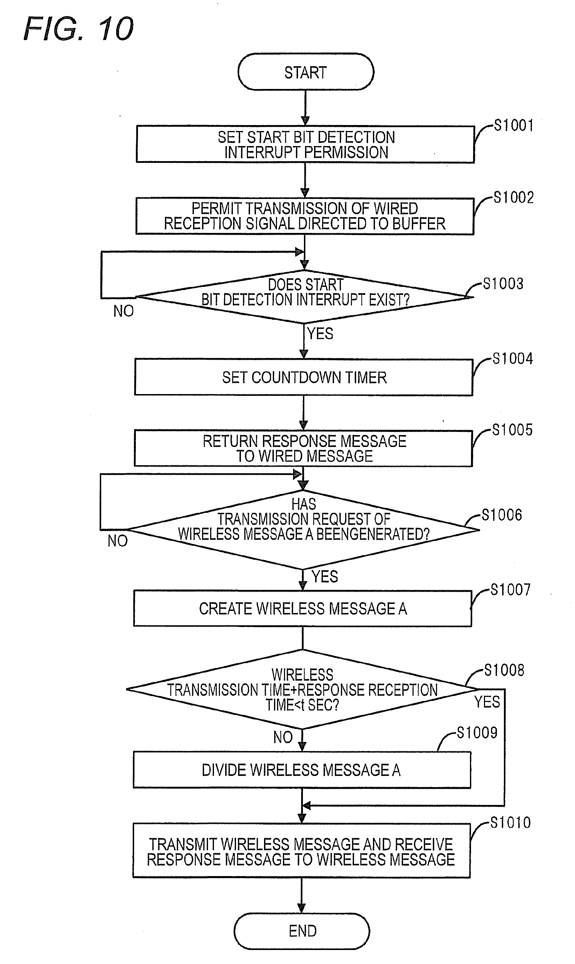

In addition to a call process or an incoming signal sensing process, communication is periodically performed between the SIM card 120 and the mobile terminal device 110 (for example, the periodic check of user information for employing a mobile phone). Thus, for example, when a payment process is executed by the mobile terminal device 110, there is a possibility that wireless communication with the reader/writer device 150 and signal transmission/reception for providing user information to the mobile terminal device 110 may be simultaneously performed within the SIM card 120. In this case, since the SIM card 120 has a greatly small shape as compared with the mobile terminal device 110 (for example, the SIM card 120 has external dimensions: about Width 15 mm×Depth 25 mm×Thickness 0.76 mm), there is a possibility that the characteristics of a radio circuit section as an analog circuit section may be degraded when the analog circuit section is close to a digital circuit section and both the two circuit sections are simultaneously operated. There is a possibility that a ground potential may be changed when the digital circuit section operates since a sufficient ground is not taken and similarly the characteristics of the radio circuit section may be degraded. In the third embodiment, a process to be executed by the control section 143 at the side of the SIM card 120 so as to prevent the degradation of communication characteristics will be described using Figs. 9 and 10.

As shown in Fig. 9, the control section 143 receives a message A transmitted from the side of the mobile terminal deice 110 via the mobile terminal connection section 142 in a cycle of 0.1 sec, and returns a response message thereto. The control section 143 performs wireless communication with the SIM card 120 between the return of the response message and the transmission of the next message A.

A process to be executed by the control section 143 is shown in Fig. 10. First, the control section 143 permits the interruption of start bit detection when the mobile terminal connection section 142 has received a start bit signal (step S1001). For example, when the start bit signal has been detected, the mobile terminal connection section 142 interrupts the start bit detection by transmitting a start bit detection interrupt signal to the control section 143.

Subsequently, the control section 143 permits a received data signal to be transmitted to the storage section 141 via the mobile terminal connection section 142 (step S1002). Thereby, it is possible to receive data from the mobile terminal device 110.

Subsequently, the control section 143 determines whether or not the interruption of start bit detection of the message A shown in Fig. 9 has been generated (step S1003).

When the interruption of start bit detection has been generated in step S1003, the control section 143 sets a countdown timer (t sec) to measure a passage time after a start bit signal has been detected (step S1004). The countdown timer (t sec) is a cycle of the message A transmitted from the side of the mobile terminal device 110.

Subsequently, the control section 143 returns a response message to the mobile terminal device 110 via the mobile terminal connection section 142 in response to the message A (step S1005).

Subsequently, the control section 143 determines whether or not a transmission request of a wireless signal (the wireless message A of Fig. 9) by the short-range wireless transmission/reception section 144 is generated (step S1006).

When the transmission request of the wireless signal is generated in step S1006, the control section 143 creates the wireless message A (step S1007).

Subsequently, the control section 143 determines whether or not a sum of a wireless transmission time indicating the time necessary to transmit the wireless message A and a response reception time indicating the time necessary to receive a response message corresponding to the wireless message A is less than a predetermined time (=t) (step S1008).

Here, it is possible for the control section 143 to calculate the wireless transmission time from a method of calculating the wireless transmission time from a data length of the wireless message A or a table of a prestored wireless message and a transmission time. Likewise, it is also possible to calculate the response reception time from a table of a wireless message and a response reception time.

When the sum of the wireless transmission time and the response reception time is not less than the predetermined time, the control section 143 divides the wireless message A into wireless messages A1 and A2 (step S1009). The division is made until a sum of a wireless transmission time and a response reception time of the divided wireless message is less than t. The wireless message A is not limited to the division into two, and may be divided into at least two. When the sum of the wireless transmission time and the response reception time is less than the predetermined time, the process of step S1009 is skipped.

Subsequently, the control section 143 instructs the short-range wireless transmission/reception section 144 to transmit the wireless message A or the divided wireless message and receive the response message. The short-range wireless transmission/reception section 144 performs transmission/reception on the basis of the instruction (step S1010).

According to the SIM card 120 that executes the process of Fig. 10, it is possible to prevent wireless communication characteristics from being degraded since wireless communication can be performed after communication with the mobile terminal device 110 is ended even though an execution request of wireless communication with the reader/writer device 150 exists when communication with the mobile terminal device 110 is periodically performed.

In the case of Fig. 9, it is possible to prevent the timing of wired communication from overlapping with the timing of wireless communication by dividing the wireless message even when the time necessary to transmit/receive a wireless message to be transmitted and a response message to be received in response thereto is longer than a cycle of communication with the mobile terminal device 110.

### (Embodiment 4)

As described above, the short-range wireless transmission/reception section 144 transmits/receives a signal via a radio wave for short-range communication to be used in 400 MHz-band specified low-power radio and RFID (Radio Frequency Identification) or a radio wave of a UWB (Ultra Wide Band) or the like via an antenna formed on the radio circuit 122. However, a radio wave arrival range may reach from several meters to several tens meters, and a plurality of mobile terminal devices which performs wireless communication with the reader/writer device 150 may be present.

Without the intention of the user under this situation, wireless communication may be performed between the SIM card 120 and the reader/writer device 150 to start a payment process.

Here, when wireless communication is performed between the reader/writer device 150 and the SIM card 120 in the fourth embodiment, a load of the reader/writer accompanying an authentication process with a plurality of SIM cards 120 is reduced and also the authentication process is performed only with a SIM card 120 for which the authentication process is necessary.

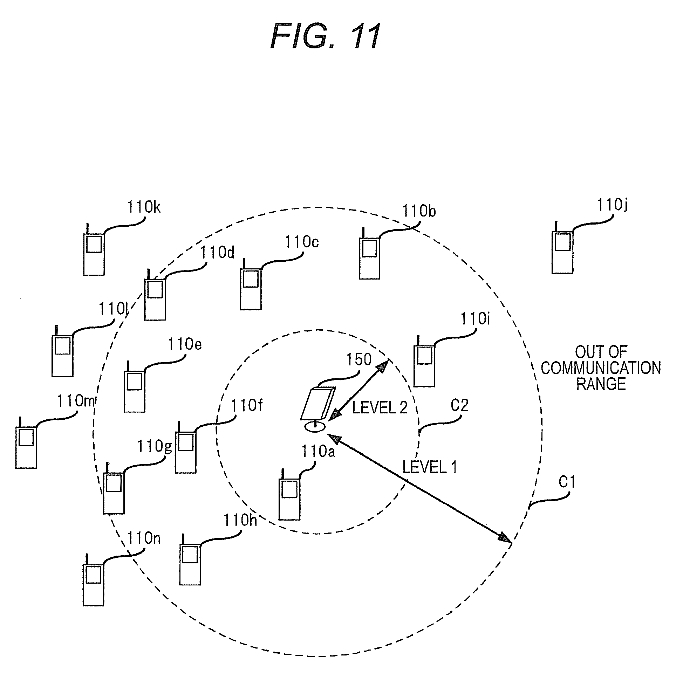

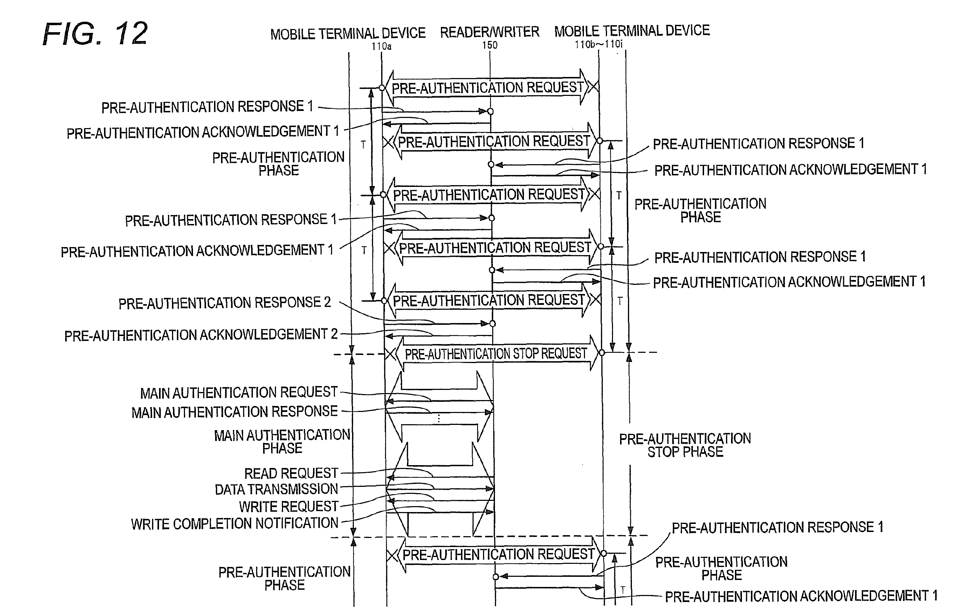

Hereinafter, a process to be executed by the mobile terminal device 110 and the reader/writer device 150 will be described. Fig. 11 shows a positional relationship between the mobile terminal device and the reader/writer device. Fig. 12 shows an authentication processing sequence between the mobile terminal device and the reader/writer device.

As shown in Fig. 11, a plurality of mobile terminal devices 110a to 110n equipped with the SIM cards 120 is located around the reader/writer device 150. The mobile terminal devices 110a to 1i are located within a communication range where the SIM card 120 can wirelessly communicate with the reader/writer device 150. On the other hand, the mobile terminal devices 110j to 110n are located out of the communication range where the SIM card 120 can wirelessly communicate with the reader/writer device 150.

In Fig. 11, the communication range where the SIM cards 120 can wirelessly communicate with the reader/writer device 150 is indicated by a circle C1 formed by the dotted line. The circle C1 is a circle having the reader/writer device 150 as the center, and is depicted in response to a threshold value (level 1) of a minimum required reception intensity in which the reader/writer device 150 wirelessly communicates with the SIM card 120. A circle C2 is a circle having the reader/writer device 150 as the center, and is depicted in response to a threshold value (level 2) of a higher reception intensity than the level 1. In Fig. 11, the mobile terminal device 110a is located inside the circle C2.

Hereinafter, the case where the mobile terminal device is located outside the circle C1 and the case where the mobile terminal device is located inside the circle C1 will be described using Fig. 12.

First, when the mobile terminal device is located outside the circle C1, the SIM cards 120 provided on the mobile terminal devices 1 10j to 110n perform carrier sensing in a cycle T, but do not receive a radio wave output by the reader/writer device 150 and are incapable of performing an authentication process.

Next, when the mobile terminal device is located inside the circle C1, the mobile terminal devices 110a to 110i perform the authentication process with the reader/writer device 150 in a pre-authentication phase to be described later. The reader/writer device 150 executes the authentication process with the mobile terminal devices 110a to 110i located inside the circle C1 in the pre-authentication phase to be described later.

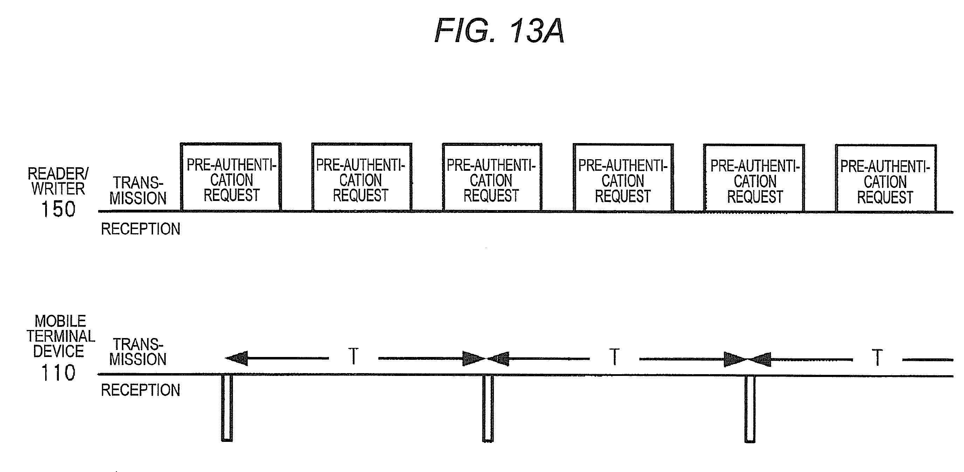

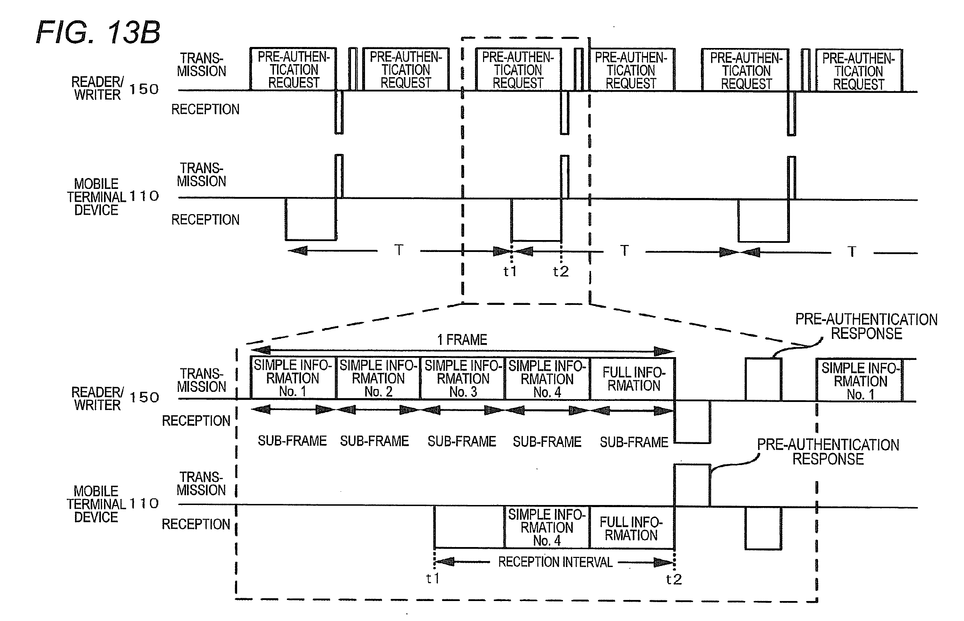

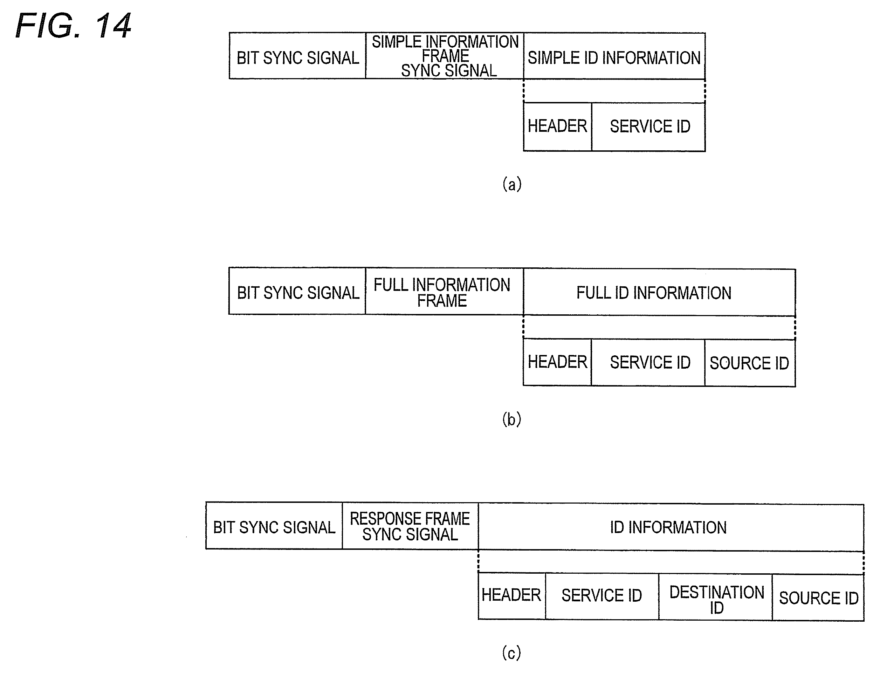

Next, a pre-authentication request and a pre-authentication response transmitted/received by the mobile terminal devices 110a to 110i and the reader/writer device 150 will be described with reference to Figs. 13 and 14.

Fig. 13 shows the timing of transmitting/receiving a pre-authentication request signal and a pre-authentication response signal. Fig. 13(a) shows the timing of transmitting/receiving the pre-authentication request signal and the pre-authentication response signal when the mobile terminal device is located outside the circle C1. Fig. 13(b) shows the timing of transmitting/receiving the pre-authentication request signal and the pre-authentication response signal when the mobile terminal device is located inside the circle C1. The diagram of the lower portion of Fig. 13(b) is the enlargement of a range surrounded by the dotted line of the upper portion of Fig. 13 (b).

When the mobile terminal device is located outside the circle C1, the reader/writer device 150 periodically transmits the pre-authentication request signal as shown in Fig. 13(a). On the other hand, the SIM cards 120 mounted on the mobile terminal devices 110j to 110n perform carrier sensing in a cycle T. However, the SIM cards 120 mounted on the mobile terminal devices 110j to 110n do not receive the pre-authentication request signal and do not return the response to the reader/writer device 150.

When the mobile terminal device is located inside the circle C1, the SIM cards 120 mounted on the mobile terminal devices 110a to 110i can receive the pre-authentication request signal transmitted from the reader/writer device 150 when carrier sensing has been performed as shown in Fig. 13(b). At this time, the SIM cards 120 mounted on the mobile terminal devices 110a to 110i perform carrier sensing to receive the pre-authentication request signal from time t1 at which the transmission of the pre-authentication request signal from the reader/writer device 150 has been detected to time t2 at which the transmission of the pre-authentication request signal by the reader/writer device 150 is ended.

A frame constituting the pre-authentication request signal is divided into a sub-frame constituting simple information and a sub-frame constituting full information as shown in the lower portion of Fig. 13(b). In Fig. 13(b), the frame of the pre-authentication request signal includes 4 sub-frames constituting simple information (from simple information No. 1 to simple information No. 4) and 1 sub-frame constituting full information.

The reader/writer device 150 transmits full information after continuously transmitting simple information, including the same data, four times. The frame format of a sub-frame constituting the simple information is shown in Fig. 14(a). The sub-frame constituting the simple information includes a bit sync signal for acquiring bit synchronization by the SIM card 120, a simple information frame sync signal for acquiring frame synchronization by the SIM card 120, and simple ID information as main data of the simple information.

Further, the simple ID information is constituted to include a header and a service ID. The header includes control information for specifying a type or data length of the sub-frame, or the like. The service ID includes information for identifying a service (for example, Suica (registered trademark) or Edy (registered trademark)) in which the reader/writer device 150 can execute the payment process.

A simple information-specific bit pattern may be inserted into a simple information frame sync signal. By inserting the bit pattern, the SIM card 120 receiving a certain sub-frame can identify that the sub-frame is the simple information by referring to the simple information frame sync signal before recognizing the header of the simple ID information.

The frame format of the sub-frame constituting the full information is shown in Fig. 14(b). The sub-frame constituting the full information includes a bit sync signal for acquiring bit synchronization by the SIM card 120, a full information frame sync signal for acquiring frame synchronization by the SIM card 120, and full ID information which becomes main data of the full information.

Further, the full ID information is constituted to include a header, a service ID, and a source ID. The header includes control information for specifying a type or data length of the sub-frame or the like. The service ID includes information for identifying a service (for example, Suica (registered trademark) or Edy (registered trademark)) in which the reader/writer device 150 can execute the payment process. The source ID is used to identify the reader/writer device 150 transmitting the pre-authentication request signal.

A full information-specific bit pattern may be inserted into full information frame sync signal. By inserting the bit pattern, the SIM card 120 receiving a certain sub-frame can identify that the sub-frame is the simple information by referring to the full information frame sync signal before recognizing a header of full ID information.

As shown in the diagram of the lower portion of Fig. 13(b), the SIM card 120 can receive simple information No. 4 and full information when the reception of a pre-authentication request signal has been started from the middle of data constituting simple information No. 3 by performing carrier sensing at time t1. A service ID included in the simple information or a service ID included in the full information and a source ID are referred to and it is determined whether or not the service ID matches an ID of service capable of executing a payment process by its own device (SIM card 120).

When the service ID is different from an ID of service capable of executing a payment process by its own device (SIM card 120), it is determined that the service is not a service capable of executing the payment process by its own device (SIM card 120). It is not possible to receive full information, and it is possible to stop the reception of simple information and full information which is the sub-frame after the simple information.

When the service ID matches an ID of service capable of executing a payment process by its own device (SIM card 120), a pre-authentication response signal 1 or a pre-authentication response signal 2 is transmitted to the reader/writer device 150. Here, a criterion of determining whether a signal in which the pre-authentication response signal 1 is transmitted to the reader/writer device 150 is the pre-authentication response signal 1 or the pre-authentication response signal 2 is a reception intensity of the pre-authentication request signal. That is, the SIM card 120 measures a reception intensity of a radio wave including the received pre-authentication request signal, transmits the pre-authentication response signal 1 when the measured reception intensity is equal to or greater than the level 1 and less than the level 2 as a reception intensity threshold value, and transmits the pre-authentication response signal 2 when the measured reception intensity is equal to or greater than the level 2 as the reception intensity threshold value.

As described above, the SIM card 120 can reduce a load associated with a determination process by simply and easily determining whether the service is a service in which its own device (SIM card 120) can execute the payment process on the basis of a service ID included in simple information or a service ID included in full information and a source ID.

Subsequently, the frame format of a frame constituting a pre-authentication response signal to be transmitted by the SIM card 120 is shown in Fig. 14(c). The frame constituting the pre-authentication response signal includes a bit sync signal, a response frame sync signal, and ID information. The bit sync signal is information for acquiring bit synchronization by the reader/writer device 150. The response frame sync signal is information for acquiring frame synchronization by the reader/writer device 150. The ID information is main data of the pre-authentication response signal.

Further, the ID information is constituted to include a header, a service ID, a destination ID, and a source ID. The header is control information for specifying a type or data length of the frame or the like, and is identification information for specifying the pre-authentication response signal 1 or the pre-authentication response signal 2. The service ID is information for identifying a service in which a SIM card 120 can execute the payment process (for example, Suica (registered trademark) or Edy (registered trademark)). The destination ID is information for identifying the reader/writer device 150 to receive the pre-authentication response signal. The source ID is information for identifying the SIM card 120 transmitting the pre-authentication response signal.

Next, a process when the reader/writer device 150 has received the pre-authentication response signal 1 or the pre-authentication response signal 2 will be described. First, the reader/writer device 150 measures a reception intensity of a radio wave including the received pre-authentication response signal, and compares the measured reception intensity with the level 1 and the level 2 as the reception intensity threshold values.

When the measured reception intensity is equal to or greater than the level 1 and less than the level 2 as the reception intensity threshold value, it is determined that a SIM card 120 transmitting the pre-authentication response signal is located inside the circle C1 shown in Fig. 12 and outside the circle C2. On the other hand, when the measured reception intensity is equal to or greater than the level 2 as the reception intensity threshold value, it is determined that the SIM card 120 transmitting the pre-authentication response signal is located inside the circle C2 shown in Fig. 12.

Next, a process by the reader/writer device 150 when the reader/writer device 150 has received the pre-authentication response signal 1 or the pre-authentication response signal 2 will be described. When the pre-authentication response signal 1 or the pre-authentication response signal 2 is received, the reader/writer device 150 refers to a service ID of ID information constituting the pre-authentication response signal and a source ID (an ID of a SIM card 120), and determines whether or not the SIM card 120 is an object of a service in which the payment is possible using a service specified by the service ID or determines whether the use of the service specified by the service ID is prohibited (or registered in a blacldist).

When an ID list of SIM cards 120 capable of employing a service specified by a service ID is held, the reader/writer device 150 can determine whether or not a corresponding SIM card 120 is a service object by a process of only its own device (reader/writer device 150). When no ID list of SIM cards 120 capable of employing a service specified by a service ID is held, an inquiry is sent to a server using the external communication section 154 and the determination is made on the basis of a result acquired from the server.

When determining that the SIM card 120 is a service object capable of making the payment using a service specified by the service ID, the reader/writer device 150 transmits a pre-authentication acknowledgement as a response signal for the pre-authentication response signal to the SIM card 120 transmitting the pre-authentication response signal 1 and stores an ID of the SIM card 120. Here, the reader/writer device 150 transmits a pre-authentication acknowledgement 1 when receiving the pre-authentication response signal 1, and transmits a pre-authentication acknowledgement 2 when receiving the pre-authentication response signal 2. On the other hand, when the pre-authentication acknowledgement 1 or the pre-authentication acknowledgement 2 is received from the reader/writer device 150, the SIM card 120 recognizes the fact that the reader/writer device 150 determines that its own device (SIM card 120) is a service object of a service specified by the service ID.

When the reader/writer device 150 receives the pre-authentication response signal 2, the SIM card 120 transmitting the pre-authentication response signal 2 is located inside the circle C2 shown in Fig. 11, but it is considered that the SIM card 120 has been located inside the circle C1 and outside the circle C2 before being located inside the circle C2, and has already transmitted the pre-authentication response signal 1 to the reader/writer device 150. In this case, since an ID of the SIM card 120 transmitting the pre-authentication acknowledgement 1 for the pre-authentication response signal 1 is stored, the reader/writer device 150 may compare the stored ID of the SIM card 120 with a source ID (ID of the SIM card 120) of ID information constituting the pre-authentication response signal 2. The reader/writer device 150 may determine whether or not the SIM card 120 is a service object capable of making the payment using a service specified by the service ID or whether or not the use of the service specified by the service ID is prohibited (or registered in a blacklist). Thereby, a load by the reader/writer device 150 can be reduced in connection with a process of determining whether or not the SIM card 120 can provide the service.

The SIM card 120 receiving the pre-authentication acknowledgement 1 once may not transmit the pre-authentication response signal 1 to the pre-authentication request signal in a period until a reception intensity of a radio wave including the pre-authentication request signal received from the reader/writer device 150 is equal to or greater than the level 2. Thereby, the reader/writer device 150 can reduce a load by the reader/writer device 150 in connection with the determination process since the reader/writer device 150 does not make a re-determination for the SIM card 120 which has once been determined to be a SIM card 120 capable of providing the service.

When the pre-authentication acknowledgement 2 is transmitted to the SIM card 120 transmitting the pre-authentication response signal 2, the reader/writer device 150 transmits a pre-authentication stop request to another SIM card 120. A frame format of the pre-authentication stop request is the same as that of the pre-authentication request signal. It is desirable to assign a pre-authentication stop request-specific bit pattern to a frame sync signal of simple information and full information as a sub-frame or a header field.

The SIM card 120 receiving the pre-authentication stop request stops carrier sensing to be executed in a predetermined period in a cycle T.

On the other hand, the SIM card 120 receiving the pre-authentication acknowledgement 2 may also be assumed to receive the pre-authentication stop request, but setting is made so that the carrier sensing is continuously performed for the predetermined period from a time point at which the pre-authentication acknowledgement 2 has been received even though the pre-authentication stop request has been received when the pre-authentication acknowledgement 2 has been received.

Thus, only the SIM card 120 receiving the pre-authentication acknowledgement 2 waits for a main authentication request signal to be transmitted from the reader/writer device 150. Thereafter, a period until the SIM card 120 receives the pre-authentication stop request signal from the reader/writer device 150 is referred to as the "pre-authentication phase". A period in which the SIM card 120 receiving the pre-authentication stop request signal stops the carrier sensing is referred to as the "pre-authentication stop phase". A period until the SIM card 120 receiving the main authentication request signal completes the payment process is referred to as the "main authentication phase".

The SIM card 120 receiving the main authentication request signal adds information (hereinafter, referred to as "payment information") necessary for executing the payment process to a main authentication response signal, and transmits the main authentication response signal to the reader/writer device 150. When the payment information is received from the SIM card 120, the reader/writer device 150 transmits the payment information to a server using the external communication section 154 and receives the result of a payment information check process executed by the server.

When the result of the payment information check process is appropriate, the reader/writer device 150 executes the authentication process using a challenge and response system. That is, the reader/writer device 150 requests the SIM card 120 to transmit key information stored in the security storage section 145 thereof. When the key information is received from the SIM card 120, the reader/writer device 150 transmits generated random number data to the SIM card 120, performs a calculation operation on the random number data by the key information received from the SIM card 120, and stores a calculation result.

On the other hand, the SIM card 120 performs a calculation operation on received random number data by key information stored in the security storage section 145 of its own device (SIM card 120) and transmits a calculation result to the reader/writer device 150. The reader/writer device 150 compares the calculation result previously stored by performing the calculation operation with the calculation result received from the SIM card 120. When the calculation results are the same as each other, the corresponding SIM card 120 is authenticated to be appropriate. To distinguish an authentication process adopting the challenge and response system in the authentication phase and an authentication process adopting the pre-authentication request signal in the pre-authentication phase in the present specification, the former is referred to as the "main authentication, and the latter is referred to as the "pre-authentication".

Thereafter, the reader/writer device 150 receives data necessary for a payment process from the SIM card 120 by transmitting a data read request after establishing a session by executing the main authentication process, transmits the received data to the server via the external communication section 154, transmits a data write request to the SIM card 120 in response to a calculation result received from the server which executes a predetermined calculation operation on the basis of the data, and writes data necessary for the payment process to the SIM card 120. The SIM card 120 receiving the data write request from the reader/writer device 150 writes data in response to the request, and transmits a write completion notification to the reader/writer device 150 when the write process has normally been completed. The main authentication phase is ended with a series of processes of a main authentication process, a data read process, and a data write process.

When the write completion notification is received from the SIM card 120 mounted on the mobile terminal device 110a, the reader/writer device 150 starts the transmission of the pre-authentication request signal. Thereby, the SIM card 120 transitioning to the pre-authentication stop phase by receiving the pre-authentication stop request re-transitions to the pre-authentication phase.

According to the SIM card 120 and the reader/writer device 150 of the embodiment of the present invention, the reader/writer device 150 simply and easily authenticates the SIM card 120 capable of providing a service by the reader/writer device 150 in the pre-authentication phase, and performs high-security required authentication with a SIM card 120 possessed by a user to execute the payment process in the main authentication phase, that is, only one SIM card 120 located in a place at a distance which is shorter than a predetermined distance from the reader/writer device 150, such that only the SIM card 120 which is successful in the authentication process of the respective phases can execute the payment process.

Thus, even in a system to be executed by SIM cards 120 and the reader/writer device 150, it is simple and easy to execute an authentication process with a plurality of SIM cards 120 around the same time. On the other hand, since the number of SIM cards 120 for which high-security required authentication is executed is limited to one, a load of the reader/writer accompanying an authentication process with the plurality of SIM cards can be reduced.

Even in a system to be executed by SIM cards 120 and the reader/writer device 150, it is possible to specify a SIM card 120 necessary to execute the payment process and prevent the user's unintended payment process by appropriately setting a distance between the reader/writer device 150 to execute the main authentication and the SIM card 120.

In the related art, the pre-authentication and main authentication described in the embodiment of the present invention are executed. However, in the embodiment of the present invention, the time necessary for the payment process can be shortened by the time in which the pre-authentication is not executed since the reader/writer device 150 is constituted to execute the pre-authentication for an arbitrary SIM card 120 before the payment process regardless of the execution or non-execution of the payment process for the corresponding SIM card 120 later, and execute only the main authentication for the SIM card 120 as a payment process object when the payment process is executed.

Since only a small amount of data is transmitted/received by the reader/writer device 150 and the SIM card 120 so as to execute the pre-authentication described in the embodiment of the present invention, the SIM card 120 and the reader/writer device 150 of the present invention are highly useful for the specified low power radio available in a system executed by a remote SIM card 120 and the reader/writer device 150.

There is a high possibility that one reader/writer device and multiple SIM cards may exist, and constantly a plurality of SIM cards is assumed. Thus, a method of efficiently implementing communication sync correction in response to a situation of the number of SIM cards located around the reader/writer device is possible.

For example, a transmission interval of a pre-authentication request signal transmitted from the reader/writer device (which is the time until the next pre-authentication request signal is transmitted after the transmission of the pre-authentication request signal, and is hereinafter referred to as the transmission interval Tx) is variable.

It is possible to receive a large number of responses of peripheral SIM cards 120 as the transmission interval Tx of the pre-authentication request signal is lengthened, but the efficiency of system becomes bad by the degradation of real-time capability when the time of the transmission interval Tx is excessively long. In contrast, when the time of the transmission interval Tx is short, the real-time capability is improved, but a large number of SIM cards may be located around the read/writer device 150. As a result, all responses from the SIM cards may not be received, and there is a possibility that SIM cards for which communication is not established may appear. Thus, since the system may be affected adversely when the time of the transmission interval Tx is excessively long or short, it is necessary to be appropriately adjusted.

The transmission interval Tx is designated by further including sync correction information for efficiently performing sync correction in response to a surrounding environment of the reader/writer device 150 in the frame format of a sub-frame constituting full information shown in Fig. 14(b). That is, the sync correction information indicates the transmission interval Tx, and is the transmission interval of a pre-authentication request to be transmitted by the reader/writer device 150. In other words, it is the timing of returning a pre-authentication response to the reader/writer device 150 after the SIM card receives the pre-authentication request.

To define the transmission interval Tx, the reader/writer device 150 first transmits the pre-authentication request by initially setting the transmission interval Tx of the pre-authentication request to be long, and counts the number of pre-authentication responses 1 or pre-authentication responses 2 as the response to the pre-authentication request within the time Tx.

At this time, when the count number of responses has a greater margin than that of a time set by Tx (when the assumed number of responses is small), a value of sync correction information designated by a full information frame of the next pre-authentication request is decreased and the Tx time is set to be shorter than a predetermined time. This means that the assumed number of SIM cards to be authenticated around the reader/writer device 150 is small. The system responsiveness can be improved by shortening the transmission interval Tx.

When the count number of responses does not have a margin in a time set by Tx (when the assumed number of responses is large), a value of sync correction information designated by a full information sub-frame of the next pre-authentication request is set to be greater than a predetermined time and the transmission interval Tx is set to be long. This means that there is a possibility that the number of SIM cards to be authenticated around the reader/writer device 150 may be greater than an assumed value, and there is a possibility that the reader/writer device 150 may not receive all responses of SIM cards located around the reader/writer device 150. It is possible to appropriately recognize surrounding situations by setting the transmission interval Tx to be long and receiving responses of a large number of SIM cards located around the reader/writer device 150 without omission.

As described above, sync correction information is changed in accordance with a situation every time when a pre-authentication request is transmitted. Therefore, an appropriate transmission interval Tx can be set in response to a surrounding environment of the reader/writer device 150, sync correction can be executed efficiently, and a flexible system can be provided.

While the present invention has been described in detail, or with reference to the specific embodiments, it is apparent for those skilled in the art that the invention may be modified and changed in various manners without departing from the scope and spirit of the invention.
The present application is based on Japanese Patent Application No. 2007-233683 filed on September 10, 2007, Japanese Patent Application No. 2007-234203 filed on September 10, 2007, Japanese Patent Application No. 2007-275357 filed on October 23, 2007, Japanese Patent Application No. 2008-130425 filed on May 19, 2008, Japanese Patent Application No. 2008-159970 filed on June 19, 2008, and Japanese Patent Application No. 2008-179846 filed on July 10, 2008, the entire content of which is incorporated by reference herein.

### Industrial Applicability

As described above, since a mobile terminal device and a reader/writer device according to the present invention accurately perform communication, regardless of how a user holds or grips the mobile terminal device, an angle between the reader/writer device and the mobile terminal device, and an installation position of a SIM card or a structure of the mobile terminal device, it is applicable to equipment in which a transmission/reception section is provided as well as mobile terminal devices.

## Claims

1. A reader/writer device for wirelessly communicating with a mobile terminal device equipped with a SIM card having a wireless communication function, comprising:
an antenna device for wirelessly communicating with the mobile terminal device; and
a wireless communication controller for controlling wireless communication via the antenna device,
wherein the antenna device includes a first antenna section and a second antenna section installed in a position different from that of the first antenna section, and
wherein the wireless communication controller transmits authentication level setting signals to the mobile terminal device using the first antenna section and the second antenna section, detects each reception intensity value by receiving a response signal including a reception intensity value of each of the authentication level setting signals from the mobile terminal device, and determines whether to use the first antenna section or the second antenna section when wireless communication with the mobile terminal device is performed on the basis of each reception intensity value detected.

2. The reader/writer device according to Claim 1,
wherein the wireless communication controller
determines to use the first antenna section upon wireless communication with the mobile terminal device when a reception intensity value obtained by employing the first antenna section is greater than a reception intensity value obtained by employing the second antenna section, and
determines to use the second antenna section upon wireless communication with the mobile terminal device when the reception intensity value obtained by employing the first antenna section is equal to or less than the reception intensity value obtained by employing the second antenna section.

3. The reader/writer device according to Claim 2,
wherein the wireless communication controller controls a storage means to store a larger reception intensity value between the reception intensity value obtained by employing the first antenna section and the reception intensity value obtained by employing the second antenna section, produces a reception intensity value of a wireless message when the wireless message transmitted from the mobile terminal device has been received, and compares the reception intensity value with the reception intensity value stored in the storage means.

4. An authentication system comprising:
a mobile terminal device equipped with a SIM card having a wireless communication function; and
the reader/writer device according to any one of Claims 1 to 3.
